# EUROPÄISCHE PATENTSCHRIFT

(11) **EP 2 823 956 B1**
(45) Veröffentlichungstag und Bekanntmachung des Hinweises auf die Patenterteilung: **16.09.2015**
(21) Anmeldenummer: 13176369.0
(22) Anmeldetag: 12.07.2013
(51) Int. Cl.: B29D 35/14, A43B 17/00, A43B 7/14, A43B 17/14

(54) **Schaumkunststoff-Schuheinlegesohle mit textiler Lage und Verfahren zu deren Herstellung**
Foam plastic shoe insole with a textile ply and method for their preparation
Semelle de chaussure en caoutchouc dotée d'une couche textile et son procédé de fabrication

(43) Veröffentlichungstag der Anmeldung: 14.01.2015
(73) Patentinhaber: Spannrit Schuhkomponenten GmbH, 63801 Kleinostheim (DE)
(72) Erfinder: Katzer, Roland, 63801 Kleinostheim (DE)
(74) Vertreter: Erhardt, Martin

(56) Entgegenhaltungen:
- WO-A2-2007/100922
- DE-A1-102010 008 627

## Beschreibung

Die Erfindung betrifft ein Herstellverfahren für Schaumkunststoff-Schuheinlegesohlen mit einer flexiblen Lage. Die Erfindung betrifft ferner Schaumkunststoff-Schuheinlegesohlen, die in einer Schuhsohlen-Schäumform aus geschäumtem Schaumkunststoff mit dem erfindungsgemäßen Herstellverfahren hergestellt wurden. Die erfindungsgemäßen Schuheinlegesohlen sind bevorzugt orthopädisch ausgebildet und weisen auf ihrer Unterseite eine an eine Schuhinnenform angepasste Oberfläche auf. Die Erfindung betrifft weiter ein Herstellverfahren für Schuheinlegesohlen, welche mit zweikomponentigem Kunststoffen in einem Schäumverfahren hergestellt werden. Die dabei eingesetzten Kunststoffe sind bevorzugt beispielsweise Polyurethan (PU) oder Ethylenvinylacetat (EVA).

Ein Schäumverfahren für Schuheinlegesohlen aus PU- oder EVA-Schaum ist beispielsweise aus DE 10 2010 08 627 A1 bekannt. Bei diesem bekannten Verfahren wird ein nicht elastisches Textil zumindest in Teilbereichen schichtartig innerhalb einer Schuheinlage angeordnet und vom Schaumkunststoff durchschäumt. Nach dem Durchschäumen mit Kunststoff ist das Textil auch unter Belastung stabil.

In vielen Anwendungen ist jedoch eine weiche Polstersohle gewünscht, welche durch eine Unterschicht, die der Schuhsohle zugewandt ist, formstabil gehalten wird. Idealerweise ist eine derartige Schicht an der Unterseite einer Schuheinlegesohle direkt an der Außenseite der Schuheinlegesohle angeordnet, die der Schuhsohle zugewandt, bzw. die dem Fuß des Trägers eines Schuhs, in dem die Sohle eingelegt werden soll, abgewandt ist.

In WO 2007/100922 A2 ist ein Verfahren zur gleichzeitigen Herstellung einer Vielzahl von Schuheinlegeteilen mit einem Gelkissen und einer flexiblen Lage bekannt. Die vom Fuß abgewandte Seite der in einer Aushärtform hergestellten Gelkissen kann mit einem Haftmittel beschichtet werden, um die Einlegeteile in einem Schuh fixieren zu können. Bei der Herstellung der Einlegeteile wird die untere Hälfte einer zweiteiligen Form mit einer Barriereschicht versehen, auf welche ein Gelvorläufer aufgetragen wird. Auf den Gelvorläufer wird eine Stabilisierungsschicht aufgetragen und die Form geschlossen. Der Gelvorläufer härtet zu einem Gel aus. Das fertige Gelkissen wird dann, umschlossen von der Barriereschicht und der Stabilisierungsschicht, aus der Form genommen und alternativHaftmittel auf die Barriereschicht aufgetragen oder die Barriereschicht entfernt, falls das Gel bereits Hafteigenschaften aufweist. Die Fixierung der Lage der Barriereschicht in der unteren Formhälfte erfolgt durch Registrierungsmittel, wie Löcher oder Perforationen, die mit komplementären Strukturen der Form zusammenwirken.

In DE 10 2010 008 627 A1 ist eine mehrschichtige Schuheinlage beschrieben, bei deren Herstellung eine Vlieseinlage von einem aufgeschäumten Kunststoff durchdrungen wird. Hierbei wird eine textile oder aus Leder bestehende Deckschicht nicht oder nur teilweise durchschäumt. Die Deckschicht kann auf der Unter- oder der Oberseite der Einlegesohle angeordnet sein.

Bei dem aus dem Stand der Technik bekannten Verfahren wird das Textil allseitig mit Schaumkunststoff umschäumt. Gleichzeitig durchschäumt der aufgeschäumte Kunststoff die textile Lage. Mit dem aus dem Stand der Technik bekannten Verfahren lässt sich die textile Lage nicht an der Unterseite der Schaumkunststoffeinlage anordnen, da ein Unterspülen der textilen Lage nicht vermieden werden kann, auch deshalb, da die textile Lage durchschäumbar ist. Bei dem bekannten Verfahren wird die textile Lage beispielsweise in die untere Formhälfte eines Schäumwerkzeuges gelegt und bevorzugt beim Schließen der Schäumform durch die obere Formhälfte geklemmt. Beim Einbringen von schäumbarem Kunststoff schwimmt die textile Lage auf, wodurch eine definierte Lage in der fertigen Schaumkunststoff-Schuheinlegesohle nur eingeschränkt möglich ist.

Aufgabe der Erfindung ist es daher, ein Verfahren und eine mit diesem Verfahren hergestellte Schaumkunststoff-Schuheinlegesohle anzugeben, bei der eine flexible Lage die Unterseite bzw. Außenseite einer Schaumkunststoff-Schuheinlegesohle bildet. Dabei soll ein Aufschwimmen einer flexiblen Lage in der Ausschäumform während des Schäumvorgangs vermieden werden. Das Verfahren soll ferner ein kostengünstiges mit wenigen Arbeitsschritten auskommendes Herstellverfahren für eine Schuheinlegesohle aufzeigen, welches bevorzugt ohne Nacharbeit auskommt.

Die Aufgabe wird mit einem Verfahren nach Anspruch 1 gelöst, wobei die von Anspruch 1 abhängigen Unteransprüche das Verfahren weiterbilden. Die im Anspruch 5 angegebene Schuheinlegesohle löst die Aufgabe ebenfalls, wobei die dort angegebene Schaumkunststoff-Schuheinlegesohle in den abhängigen Ansprüchen weitergebildet wird.

Das erfindungsgemäße Verfahren zum Herstellen einer Schaumkunststoff-Schuheinlegesohle aus einem aufschäumbaren Kunststoff und einer flexiblen Lage erfolgt bevorzugt in einer Schuhsohlen-Schäumform, die eine obere und eine untere Formhälfte aufweist. Solche Schuhsohlen-Schäumformen sind im Stand der Technik bekannt und werden vielfach zur Herstellung von Schuheinlegesohlen verwendet. Dabei wird in den Hohlraum, welcher durch die obere und die untere Formhälfte in der Schäumform bereitgestellt wird, ein aufschäumbarer Kunststoff, wie beispielsweise Polyurethan (PU) oder Ethylenvinylacetat (EVA) eingebracht und Schuheinlegesohlen aufgeschäumt. Herkömmlich weist die untere Formhälfte eines derartigen Schäumwerkzeuges eine formgebende Oberfläche als Negativ der Unterseite der Schuheinlegesohle auf, die weiter bevorzugt an eine Innenform eines Schuhs, in den die Schuheinlegesohle eingelegt werden soll, angepasst ist. Die obere Formhälfte bildet bevorzugt ein orthopädisches Fußbett aus, das beispielsweise zusätzlich, wenn nötig, durch Orthopäden oder Orthopädietechniker anpassbar ist. Nach dem Schäumen kann eine solche Schuheinlegesohle, bevorzugt ohne weitere Nacharbeit, in einen Schuh eingelegt werden.

Bei dem erfindungsgemäßen Herstellverfahren für Schuheinlegesohlen soll an der Unterseite der Schuheinlegesohle sichtbar eine flexible Lage angeordnet werden. Erfindungsgemäß wird hierzu die flexible Lage vor einem Einlegen in die Schäumform mit einem Haftmittel beschichtet. Die mit Haftmittel beschichtete Seite der flexiblen Lage wird mit möglichst vollflächigen Kontakt auf die formgebenden Oberfläche der unteren Formhälfte eingelegt und haftet dort an. Alternativ kann die formgebende Oberfläche der unteren Form hälfte der Schäumform mit Haftmittel beschichtet sein, so dass die flexible Lage beim Einbringen in die untere Formhälfte mit dem Haftmittel in Kontakt kommt und dort anhaftet. Dabei ist es nicht erfindungswesentlich, ob das Haftmittel auf die flexible Lage aufgebracht wird oder ob das Haftmittel in die Form eingebracht wird, bevor die flexible Lage in diese eingelegt wird. Erfindungswesentlich ist lediglich eine haftvermittelnde Schicht zwischen der flexiblen Lage und der formgebenden Oberfläche der unteren Formhälfte der Schäumform während des Schäumens der Schuheinlegesohle. Durch die Anhaftung der flexiblen Lage auf der formgebenden Oberfläche des unteren Teils der Ausschäumform, bleibt die flexible Lage während des Formvorgangs fixiert und schwimmt in der Schäumform weder beim Einbringen von Schaumkunststoff, noch beim Aufschäumen des Schaumkunststoffs auf. Hierzu ist die flexible Lage bevorzugt nicht durchschäumbar ausgebildet und kann daher von eingesetztem Schaumkunststoff nicht durchgedrungen werden.

Mit dem anhaftenden Einlegen der undurchlässigen flexiblen Lage auf die der Sohlenunterseite formgebende Fläche der unteren Formhälfte wird erreicht, dass die flexible Lage nach der Entnahme der geschäumten Schuheinlegesohle aus der Schäumform an dessen Unterseite angeordnet ist und sichtbar ist. Weiterhin wird durch die Verwendung eines Haftmittels sichergestellt, dass die flexible Lage bei Einbringen des Schaumkunststoffes in die Schäumform nicht unterspült wird und so in seiner vorgesehenen Position verbleibt. Somit ist die Außenseite der flexiblen Lage nach Entnehmen der geschäumten Schuheinlegesohle sichtbar und im Wesentlichen frei von Schaumkunststoff. Auch ein an der Außenseite der flexiblen Lage angeordnetes Dekor ist nach dem Schäumen auf der Unterseite der Schuheinlegesohle weiterhin sichtbar.

Weiterhin gewährleistet das Haftmittel, bspw. ein Heißkleber oder ein druckempfindlicher Kleber, dass die flexible schaumdichte Lage im Wesentlichen vollflächig in Kontakt mit der formgebenden Oberfläche der unteren Formhälfte bleibt. Ein druckempfindlicher Kleber im Sinne der Erfindung ist dabei Kleber, der lediglich durch Andrücken auf eine Oberfläche eine Adhäsionswirkung zeigt. Ähnliche Kleber sind bspw. von Haftklebezetteln bekannt oder kommen bei Klebebändern zum Einsatz. Erfindungsgemäße Haftmittel können jedoch alle Kleber sein, die keine dauerhafte Verbindung mit dem Material der Schäumform eingehen und nicht chemisch mit dem eingesetzten Schaumkunststoff oder dem Material der Schäumform reagieren. Durch die formgebende Oberfläche der unteren Formhälfte wird die Unterseite der Schuheinlegesohle geformt, welche bevorzugt an eine Innenform eines Schuhs angepasst ist.

Nach Einbringen bzw. Einlegen der flexiblen Lage in die Schäumform kann nach Schließen der Form aufschäumbarer Kunststoff in die Form eingebracht werden, wodurch der Schaumkunststoff-Polsterkörper der Schuheinlegesohle geformt wird. Mit dem Aufschäumen des eingesetzten Kunststoffs wird die Schäumform gefüllt und die formgebenden Oberflächen der beiden Werkzeughälften werden abgeformt. Nach dem Aushärten des geschäumten Schaumkunststoffs kann die Schuheinlegesohle zusammen mit der angeschäumten flexiblen Lage aus der Schäumform entnommen werden. Die flexible Lage bildet dabei zumindest teilweise die Unterseite der Schuheinlegesohle und liegt bevorzugt falten- und wellenfrei an, wobei auch ein Umspannen der Unterseite der Schuheinlegesohle durch die flexible Lage vom Erfindungsgedanken umfasst ist. Dies wird insbesondere dadurch erreicht, dass die flexible Lage, welche von dem eingesetzten Schaumkunststoff nicht durchschäumbar ist, mit dem Haftmittel vollflächig an den formgebenden Oberflächen der Schäumform fixierbar ist, so dass Schaumkunststoff beim Schäumen der Schuheinlegesohle nicht zwischen die flexible Lage und den formgebenden Oberflächen der Formhälften eindringen kann. Damit kann eine Stabilisierung bzw. eine fußstützende Wirkung der Schuheinlegesohle durch die flexible Lage mit entsprechender Polsterung erfindungsgemäß erzielt werden. Als weiterer Effekt kann die flexible Lage auch zur optischen Gestaltung der Unterseite der Schuheinlegesohle verwendet werden, da die mit Haftmittel beschichtete Außenseite der flexiblen Lage nach dem Schäumvorgang an der Unterseite der Schuheinlegesohle sichtbar ist. Gegebenenfalls muss hierzu das Haftmittel nach der Entnahme der Schuheinlegesohle aus der Schäumform von der Unterseite der Schuheinlegesohle entfernt werden.

Die mit dem erfindungsgemäßen Verfahren hergestellte Schaumkunststoff-Schuheinlegesohle weist bevorzugt nur zwischen einer Fußbett definierenden Oberfläche und der flexiblen Lage an der Unterseite der Schuheinlegesohle Schaumstoff auf, welcher nicht an die Außenseite der flexiblen Lage gelangt. In dem Verfahren gemäß des Standes der Technik, der durchschäumbares Textil verwendet, ist die effektive Polsterhöhe reduziert, da das Textil zwischen der Unter- und der Oberseite der Schuheinlegesohle angeordnet ist. Die effektive Polsterhöhe wird jedoch zwischen der textilen Lage und der Oberseite der Schuheinlegesohle gebildet. Damit können insgesamt flachere Schuheinlegesohlen im Schäumverfahren hergestellt werden, da eine beispielsweise zur Druckverteilung eingesetzte flexible Lage sicher an der Schuheinlagensohlenunterseite anordbar ist.

In bevorzugten Ausführungsformen kann der auf einer Innenseite der flexiblen Lage angeschäumte Polsterkörper auch nur in Teilbereichen ein Fußbett ausbildend angeordnet sein, wobei insbesondere an einen Polsterkörper gedacht werden kann, der eine sichere Aufnahme für die Ferse oder eine Unterstützung des Längsgewölbes eines Fußes darstellt. Der entsprechende Vorderfußbereich kann z.B. polsterfrei nur durch die flexible Lage ausgebildet sein. Ein zwischen dem Vorderfußbereich und dem Fersenbereich angeordneter Mittelfußbereich kann wahlweise mit einem Längsgewölbe aus Schaumkunststoff versehen sein. Selbstredend kann dabei der für den Längsgewölbebereich verwendete Schaumkunststoff eine andere Materialhärte aufweisen, als der für den Fersenbereich eingesetzte Schaumkunststoff.

Eine andere bevorzugte Ausführungsform zeigt die textile Lage mit einer Ausnehmung im Fersenbereich, damit Schaumkunststoffmaterial beim Schäumen durch diese hindurchtreten kann. Dadurch wird eine bessere Polsterung/Dämpfung des Fersenbereichs, insbesondere des Fersenspoms, erreicht, wobei gleichzeitig die flexible Lage an der Unterseite der Schaumkunststoff-Schuheinlegesohle den Schaumkunststoff formstabil stützt.

Die flexible Lage der erfindungsgemäßen Schaumkunststoff-Schuheinlegesohle kann aus den verschiedensten Materialien hergestellt sein, wobei jedoch textile Lagen bevorzugt sind, die zumindest in einer Richtung zugstarr sind, so dass Kräfte zum formstabilen stützen des Schaumkunststoffes von der flexiblen Lage übernommen werden können. Als flexible Lage eignen sich dabei auch multiaxiale Gelege oder Karbonfasergewebe mit gegebenenfalls eingewebten Glasfasern. Auch herkömmliche Webmaterialien oder Gewirke mit und ohne Faserverstärkung, bspw. mit Karbon oder Glasfasern, können in der flexiblen Lage bei der Herstellung der erfindungsgemäßen Schaumkunststoff-Schuheinlegesohle verwendet werden.

Werden zur Herstellung der erfindungsgemäßen Schaumkunststoff-Schuheinlegesohle Textilien, Gewebe oder Gewirke oder ähnliches verwendet, welche für den aufschäumenden Schaumkunststoff durchlässig sind, so ist eine Seite der flexiblen Lage mit einer für den Schaumstoff undurchlässigen Schicht zu versehen. Hierbei können bspw. verschiedenartigste Kunststofffolien zum Einsatz kommen, welche wiederum bevorzugt mit einem Haftmittel, bzw. einem Kleber auf der textilen Schicht der flexiblen Lage befestigt werden.

Die flexible Lage im Sinne der Erfindung kann aber auch eine herkömmliche Kunststofffolie sein, welche undurchlässig für den schäumbaren Kunststoff ist und somit lediglich durch Beschichten mit Haftmittel oder durch Einlegen in die mit Haftmittel beschichtete untere Formhälfte der Schäumform die Außenseite der erfindungsgemäßen Schaumkunststoff-Schuheinlegesohle bilden kann. Erfindungsgemäß sind also sowohl einschichtige als auch zweischichtige oder mehrschichtige flexible Lagen für die Herstellung der erfindungsgemäßen Schaumkunststoffschuheinlegesohle verwendbar, so lange die flexible Lage von dem eingesetzten schäumbaren Schaumkunststoff nicht durchschäumbar, sondern für diesen undurchlässig ist. Weiterhin ist es nicht erfindungswesentlich, ob die Außenseite der flexiblen Lage, welche später die Außenseite bzw. die Unterseite der Schaumkunststoff-Schuheinlegesohle bildet, selbst für den aufschäumbaren Schaumkunststoff undurchlässig ist oder nicht. Erfindungsgemäß gelangt bei dem Herstellverfahren der aufzuschäumende Kunststoff in den Bereichen, in denen die flexible Lage die Unterseite der Schaumkunststoff-Schuheinlegesohle bildet, nur zwischen die Innenseite der flexiblen Lage und der Oberseite der Schaumstoff-Schuheinlegesohle - dem orthopädischen Fußbett. Es gelangt erfindungsgemäß kein oder nur eine vernachlässigbare Menge an Schaumkunststoff an die Außenseite der flexiblen Lage, so dass die Außenseite der flexiblen Lage im Wesentlichen vollständig sichtbar an der Unterseite der Schuheinlegesohle angeordnet ist. Dies ist insbesondere dann bevorzugt, wenn die Außenseite der flexiblen Lage vor einem Einlegen der flexiblen Lage in die Schäumform mit einem Aufdruck versehen wird, der auch nach dem Schäumen der Schaumkunststoff-Schuheinlegesohle weiterhin sichtbar sein soll. Weiter bevorzugt bleiben Verstärkungsfasern, insbesondere Karbonfasern, die der Verstärkung der Schaumkunststoff-Schuheinlegesohle dienen, an der Außenseite der Schuheinlegesohle sichtbar, wodurch der Einsatz von Karbonfasern oder auch Glasfasern in der Schuheinlegesohle leicht erkennbar ist.

Ein weiterer Vorteil des erfindungsgemäßen Verfahrens liegt darin, dass bei Verwendung einer für den aufschäumbaren Kunststoff undurchlässigen flexiblen Lage an der Unterseite der Schaumkunststoffeinlage eine geschlossene, widerstandsfähige Schicht anordbar ist, und an der Schuheinlegesohleunterseite bevorzugt kein Schaumkunststoff vorhanden ist, der gegen Abrieb und dergleichen geschützt werden müsste. Somit kann die erfindungsgemäß hergestellte Schaumkunststoff-Schuheinlegesohle nach dem Schäumen in der Schäumform direkt in einen Schuh eingelegt werden, insbesondere auch dadurch, da ihre Unterseite eine bereits an eine Schuhform angepasste Außenseite aufweist. In einer weiteren Ausführungsform, gegebenenfalls zur Steigerung des Komforts oder der Wertigkeit der erfindungsgemäßen Schuheinlegesohle, kann diese auf der Oberseite, also der Seite, die das orthopädische Fußbett aufweist, mit einer Deckschicht versehen werden, die bevorzugt aus Textil, Leder, Alcantara oder ähnlichem fachüblichen Material für obere Deckschichten ausgebildet ist.

Mit dem erfindungsgemäßen Herstellverfahren für eine orthopädische Schaumkunststoff-Schuheinlegesohle kann eine Schuheinlegesohle bereitgestellt werden, an deren Unterseite eine flexible Lage angeordnet ist, so dass die Unterseite der Schuheinlegesohle nach der Entnahme der Schuheinlagesohle aus einer Schäumform nicht mehr bearbeitet werden muss. Dabei verbindet sich die flexible Lage an ihrer Innenseite dauerhaft mit dem Schaumkunststoff und ist selbst für den aufschäumbaren Schaumkunststoff undurchlässig. Bei dem erfindungsgemäßen Herstellverfahren wird vor dem Aufschäumen der erfindungsgemäßen Schaumkunststoff-Einlegesohle die Oberfläche der flexiblen Lage, welche später die Außenseite bzw. die Unterseite der Schaumkunststoff-Einlegesohle bildet, mit einem Haftmittel beschichtet und in die Schäumform derart eingelegt, dass die flexible Lage abstandslos auf der formgebenden Oberfläche, welche die Unterseite der Schuheinlegesohle ausbildet, fixiert wird. Alternativ kann das Haftmittel auch direkt auf die formgebende Oberseite für die Außenseite der Schuheinlegesohle aufgebracht werden und die flexible Lage in das Haftmittel eingelegt werden. Gegebenenfalls ist nach dem Schäumen und der Entnahme der erfindungsgemäßen Schaumkunststoff-Schuheinlegesohle das an der Außenseite der flexiblen Lage bzw. an der Außenseite der Schuheinlegesohle anhaftende Haftmittel mit geeigneten fachüblichen Mitteln zu entfernen. Vom Erfindungsgedanken ist jedoch auch ein Belassen der Haftmittelschicht auf der Schuheinlegesohle umfasst. Ebenso ist ein Anbringen einer Schutzfolie auf die mit Haftmittel benetzte Außenseite der Schuheinlegesohle nach der Entnahme aus der Schäumform umfasst, wodurch beispielsweise die Schaumkunststoff-Schuheinlegesohle haftend in einen Schuh platziert werden kann. Hierzu ist lediglich die Schutzfolie von der Haftschicht abzuziehen, womit die Haftschicht in dieser beispielhaften Ausführungsform eine doppelte Funktion hat: Erstens, die flexible Lage während des Schäumens in der Schäumform in der unteren Formhälfte auf der formgebenden Oberfläche für die Außenseite abstandslos zur formgebenden Oberfläche zu halten , so dass kein Schaumkunststoff an die Außenseite der flexiblen Lage gelangt und, zweitens, beim Einlegen der Schuheinlegesohle in einen Schuh die Schuheinlegesohle mit der Schuhinnensohle in einer haftenden Verbindung zu halten, was beispielsweise bei Teilschuheinlegesohlen bevorzugt sein kann.

Fachüblich ist bei dem erfindungsgemäßen Herstellverfahren für eine erfindungsgemäße Schaumkunststoff-Schuheinlegesohle die Verwendung von mehr als einem aufschäumbaren Schaumkunststoff zum Erzielen unterschiedlicher Härtebereiche in den verschiedenen Bereichen der Schuheinlegesohle. Üblicherweise wird man für den Fersenbereich eine mittelharte Mischung wählen, damit die Ferse zum einen stabil aufgenommen ist, aber trotzdem noch gute Dämpfungseigenschaften erreicht werden. Im Mittelfußbereich dagegen, der bevorzugt durch die Schaumkunststoff-Schuheinlegesohle gestützt werden soll, wird man härtere PU- oder EVA-Schaumkunststoffe einsetzen, und insbesondere im Vorderfußbereich wird man zum Erhöhen des Komforts einen eher weichen Schaumkunststoff auswählen. Dies sind fachübliche Abwandlungen des erfindungsgemäßen Herstellverfahrens für eine erfindungsgemäße Schaumkunststoff-Schuheinlegesohle, die daher vom Erfindungsgedanken umfasst sind, genauso wie andere fachübliche Abwandlungen.

Im Folgenden soll nun anhand von Figuren das erfindungsgemäße Herstellverfahren bzw. die erfindungsgemäße Schuheinlegesohle detailliert erläutert werden, wobei die in den Figuren gezeigte Schaumkunststoff-Schuheinlegesohle den Schutzbereich der vorliegenden Erfindung nicht limitiert. Dabei zeigen:
- Figur 1: schematisch die Unterseite einer erfindungsgemäßen Schaumkunststoff-Schuheinlegesohle;
- Figur 2: einen Querschnitt durch die erfindungsgemäße Schuheinlegesohle aus Figur 1;
- Figur 3: einen Längsschnitt durch eine erfindungsgemäße Schuheinlegesohle gemäß Figur 1.

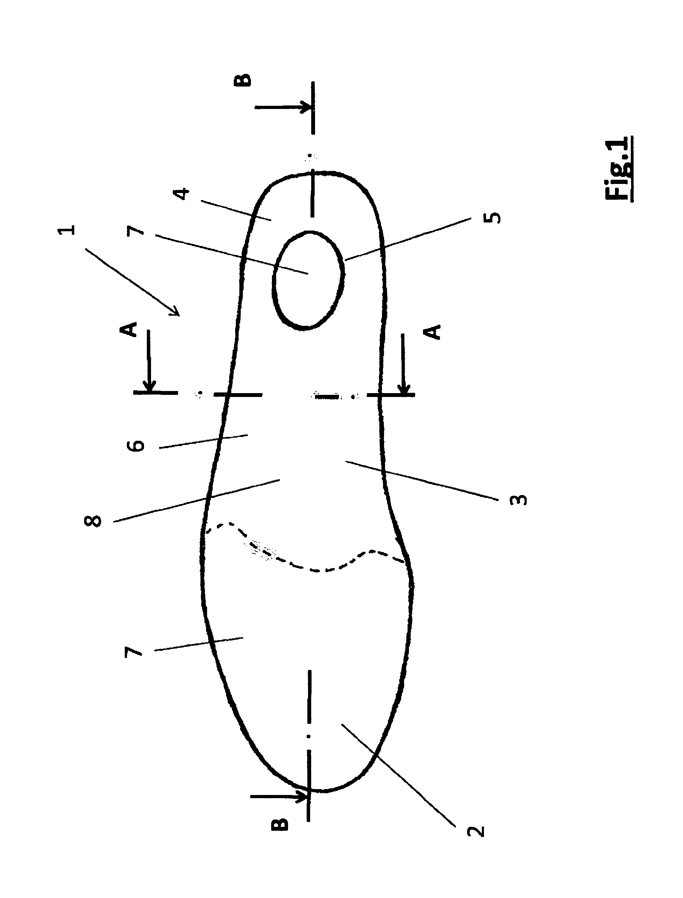

In der Figur 1 ist die Unterseite 8 einer erfindungsgemäßen Schaumkunststoff-Schuheinlegesohle 1 gezeigt. Die erfindungsgemäße Schuheinlegesohle gemäß Figur 1 zeigt weiterhin eine vom Fersenbereich 4 zum Mittelfußbereich 3 hin erstreckende flexible Lage 6, die durch Schaumkunststoff 7 angeschäumt ist. Dabei weist die flexible Lage 6 im Fersenbereich 4 weiterhin eine Ausnehmung 5 auf, durch die Schaumkunststoff 7 hindurchtreten kann. Die gestrichelte Linie in Figur 1 zeigt dabei das Ende des Polsterbereichs im Übergang zum Vorderfußbereich an, da die in Figur 1 gezeigte erfindungsgemäße Schaumkunststoff-Schuheinlegesohle nur im Fersen- und Mittelfußbereich mit aufgeschäumten Schaumkunststoff versehen ist. Im Vorderfußbereich 2 bildet die flexible Lage sowohl die Unterseite als auch die Oberseite der Schuheinlegesohle 1.

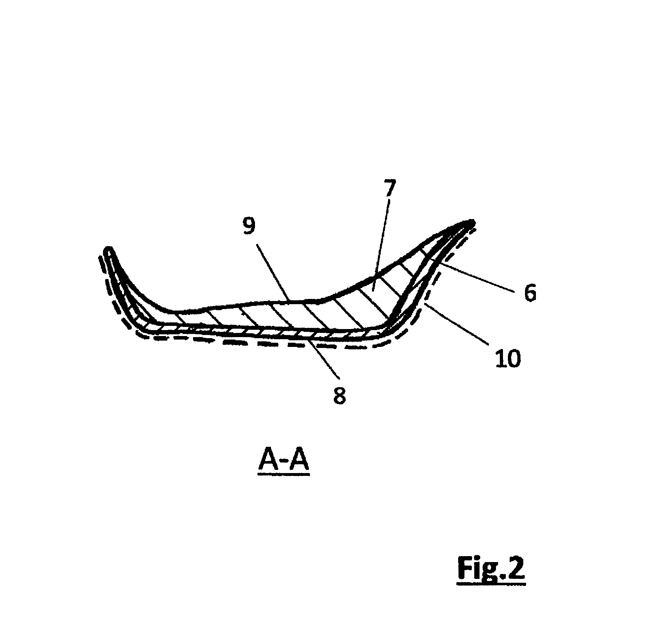

In Figur 2 ist ein Querschnitt längs der Schnittlinie A-A aus Figur 1 gezeigt, wodurch deutlich wird, dass das orthopädisch ausgebildete Fußbett auf der Oberseite 9 der erfindungsgemäßen Schuheinlegesohle 1 aus geschäumtem Kunststoff 7 gebildet wird und die flexible Lage die Unterseite bzw. Außenseite der erfindungsgemäßen Schuheinlegesohle 1 bildet. Selbstredend können auch die Seitenbereiche, welche in der in Figur 2 gezeigten Ausführungsbeispiel von der flexiblen Lage gebildet werden, auch von Schaumkunststoff ausgebildet werden und nur die Unterseite der Schaumkunststoff-Schuheinlegesohle von der flexiblen Lage gebildet werden.

Mit Bezugzeichen 10 ist in Figur 2 die erfindungsgemäß an der Außenseite der flexiblen Lage aufgebrachte Haftmittelschicht 10 dargestellt. Dieses Haftmittel 10 kann erfindungsgemäß sowohl direkt auf die flexible Lage 6 vor dem Einlegen der flexiblen Lage 6 in die untere Schäumformhälfte aufgebracht sein, als auch auf die formgebende Oberfläche der unteren Schaumformhälfte selbst. Dabei werden bevorzugt elastische Kleber und/oder druckempfindliche Kleber eingesetzt, die keine dauerhafte Verbindung mit dem Schäumformmaterial eingehen. Die Haftmittelschicht 10 kann nach dem Schäumen der erfindungsgemäßen Schaumkunststoff-Schuheinlegesohle 1 an der Unterseite der Schuheinlegesohle verbleiben oder entfernt werden. Auch eine nach der Entnahme der Schuheinlegesohle 1 aus der Schäumform die Haftmittelschicht schützen Schutzfolie kann nachträglich aufgebracht werden. Die Haftmittelschicht 10 eignet sich dann bspw. zu einem Fixieren in einem Schuh, was bevorzugt bei Teilsohlen Anwendung finden kann.

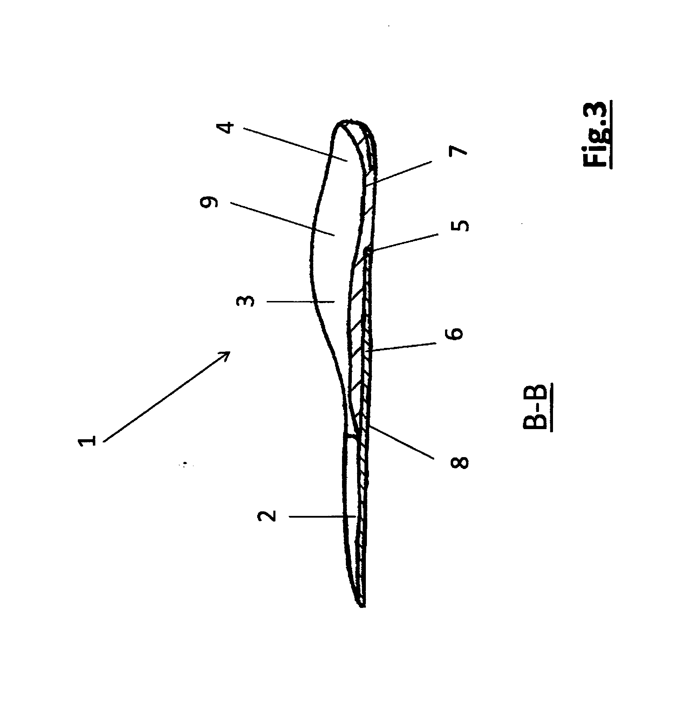

Figur 3 zeigt einen Längsschnitt der erfindungsgemäßen Schuheinlegesohle 1 gemäß Figur 1 längs der Schnittlinie B-B. Aus Figur 3 wird deutlich, dass die in Figur 1 dargestellte erfindungsgemäße Schaumkunststoff-Schuheinlegesohle 1 lediglich im Fersenbereich 4 und im Mittelfußbereich 3 mit Schaumkunststoff versehen ist, welcher das orthopädische Fußbett auf der Oberseite 9 der erfindungsgemäßen Schuheinlegesohle 1 bildet. Die flexible Lage 6 hingegen ist über die ganze Länge der Schuheinlegesohle 1 angeordnet und bildet im Vorderfußbereich 2 daher sowohl die Oberseite 9 als auch die Unterseite 8 der erfindungsgemäßen Schaumkunststoff-Schuheinlegesohle 1 aus. Im Fersenbereich 4 ist zudem eine Ausnehmung 5 erkennbar, welche mit Schaumkunststoff 7 gefüllt ist. Somit wird für den Fersenspom ein Polster bereitgestellt, welches im Vergleich zu dem die Ausnehmung 5 umgebenden Fersenbereich weicher ist und somit eine bessere Dämpfung/Polsterung zeigt.

Die in den Figuren 1 bis 3 dargestellte erfindungsgemäße Schuheinlegesohle 1 aus Schaumkunststoff ist auf ihrer Oberseite 9, auf der das orthopädische Fußbett ausgebildet ist, unbeschichtet, und kann daher bevorzugt durch Orthopäden oder Orthopädieschuhtechniker individuell an den Fuß bzw. an die Fußsohle des Trägers einer erfindungsgemäßen Schuheinlegesohle angepasst werden. Eine solche Anpassung ist jedoch nicht in allen Fällen notwendig, da ein solches orthopädisches Fußbett in der Regel für normale Füße oder bspw. für durchschnittliche Senk- oder Spreizfüße vorgeformt ist.

Mit dem erfindungsgemäßen Verfahren für die Herstellung einer Schaumkunststoff-Schuheinlegesohle wird in einer einfachen, äußerst effektiven Art und Weise ein Herstellverfahren für Schaumkunststoff-Schuheinlegesohlen aufgezeigt, welche gegenüber den herkömmlichen Verfahren des Standes der Technik eine vereinfachte Herstellung sowie eine größere Gestaltungsfreiheit erlauben.

### BEZUGSZEICHENLISTE

- 1: Schaumkunststoff-Schuheinlegesohle
- 2: Vorderfußbereich
- 3: Mittelfußbereich
- 4: Fersenbereich
- 5: Ausnehmung
- 6: flexible Lage
- 7: Schaumkunststoff
- 8: Unterseite
- 9: Oberseite
- 10: Haftmittel

## Patentansprüche

1. Verfahren zum Herstellen einer Schaumkunststoff-Schuheinlegesohle (1) aus aufschäumbaren Kunststoff und einer flexiblen Lage in einer Schuhsohlen-Schäumform mit einer oberen und einer unteren Formhälfte, wobei die obere Formhälfte ein orthopädisches Fußbett auf einer einem Fuß zugewandten Oberseite (9) und die untere Formhälfte eine an eine Schuhinnenform angepasste Unterseite (8) der Schuheinlegesohle (1) formt, wobei die flexible Lage (6) für den aufschäumbaren Kunststoff (7) undurchlässig ist und mit der dem Fuß zugewandten Seite mit dem Schaumkunststoff (7) eine dauerhafte Verbindung eingeht, mit den folgenden Schritten:
- Einlegen der flexible Lage (6) in die untere Formhälfte,;
- Einbringen und Aufschäumen von Kunststoff in der geschlossenen Form zum Ausbilden der Schaumkunststoff-Schuheinlegesohle (1);
- Entnahme der Schaumkunststoff-Schuheinlegesohle (1) aus der Schuhsohlen-Schäumform nach dem Aushärten des Schaumkunststoffs (7),
**dadurch gekennzeichnet,**
- **dass** die flexible Lage (6) vor dem Einlegen in die untere Formhälfte mit einem Haftmittel (10) auf der dem Fuß abgewandten Seite beschichtet wird oder Haftmittel (10) auf eine formgebende Oberfläche der unteren Formhälfte derart eingebracht wird, dass das Haftmittel (10) die flexible Lage (6) abstandslos vollflächig auf der formgebenden Oberfläche fixiert;

2. Verfahren nach Anspruch 1, bei dem das Haftmittel (10) von der Unterseite (8) der Schaumkunststoff-Schuheinlegesohle (1) nach der Entnahme der Schaumkunststoff-Schuheinlegesohle (1) aus der Schuhsohlen-Schäumform entfernt wird.

3. Verfahren nach Anspruch 1 oder 2, bei dem das Haftmittel (10) ein Heißkleber oder ein druckempfindlicher Kleber ist.

4. Verfahren nach einem der Ansprüche 1 bis 3, bei dem zumindest die untere Formhälfte der Schuhsohlen-Schäumform temperiert wird.

5. Orthopädische Schaumkunststoff-Schuheinlegesohle (1) mit einer einem Fuß zugewandten Oberseite (9), die ein Fußbett bildet, und mit einer Unterseite (8), die an eine Schuhinnenform angepasst ist, wobei die Schuheinlegesohle (1) aus einem aufgeschäumten Kunststoff (7)hergestellt ist, der mittels einer Schuheinlegesohlen-Schäumform an eine flexible Lage (6) angeschäumt ist, die für den Kunststoff (7) undurchlässig ist **dadurch gekennzeichnet,**
**dass** die flexible Lage (6) auf ihrer dem aufgeschäumten Kunststoff (7) zugewandten inneren Seite dauerhaft mit dem aufgeschäumten Kunststoff verbunden ist, und dass auf der äußeren Seite der flexiblen Lage (6) zum vollflächigen abstandlosen Anhaften an eine die Unterseite (8) der Schuheinlegesohle (1) bildende Oberfläche der Schäumform mit einem Haftmittel (10) beschichtet ist, sodass die flexible Lage (6) an der Unterseite (8) der Schuheinlegesohle (1) angeordnet ist und Schaumkunststoff (7) nur zwischen der inneren Seite der flexiblen Lage (6) und der Oberseite (9) der Schuheinlegesohle (1) aufgeschäumt ist.

6. Schuheinlegesohle (1) nach Anspruch 5, bei der das Haftmittel (10) ein Heißkleber oder ein druckempfindlicher Kleber ist.

7. Schuheinlegesohle (1) nach einem der Ansprüche 5 oder 6, bei der der Schaumkunstoff Polyurethan (PU) oder Ethylenvinylacetat (EVA) ist.

8. Schuheinlegesohle (1) nach einem der Ansprüche 5 bis 7, bei der die flexible Lage (6) eine Kunststoff-Folie oder ein für den Schaumkunststoff (7) undurchlässiges Textil ist.

9. Schuheinlegesohle (1) nach einem der Ansprüche 5 bis 8, bei der die flexible Lage (6) auf der äußeren Seite ein Textil und/oder die Schuheinlegesohle (1) auf der Oberseite (9) eine textilartige Deckschicht aufweist.

10. Schuheinlegesohle (1) nach einem der vorigen Ansprüche, bei der die flexible Lage (6) Karbon-Fasern aufweist.

11. Schuheinlegesohle (1) nach einem der vorigen Ansprüche, bei der sich die flexible Lage (6) und/oder der Schaumkunststoff (7) über den Fersen- und/oder Mittelfuß- und/oder Vorderfußbereich (2) erstreckt.

12. Schuheinlegesohle (1) nach einem der vorigen Ansprüche, bei der der Schaumkunststoff (7) im Vorderfußbereich (2) der Schuheinlegesohle (1) eine geringere Härte aufweist als der Schaumkunststoff (7) im Fersenbereich (4) der Schuheinlegesohle (1).

13. Schuheinlegesohle (1) nach einem der vorigen Ansprüche, bei der die flexible Lage (6) im Fersenbereich (4) eine Ausnehmung (5) aufweist, die mit Schaumkunststoff (7) gefüllt ist.

## Claims

1. Method for producing a foam plastic shoe insole (1) of foamable plastic and a flexible layer in a shoe sole foam mould with an upper mould half and a lower mould half, wherein the upper mould half forms an orthopaedic foot bed on a upper side (9) directed towards a foot, and the lower mould half forms an underside (8) of the shoe insole (1) adapted to a shoe interior shape, wherein the flexible layer (6) is impermeable to the foamable plastic (7) and, with the side directed towards the foot, establishes a permanent connection to the foam plastic (7), said method having the following steps:
- placing the flexible layer (6) in the lower mould half;
- introducing and foaming plastic in the closed mould in order to shape the foam plastic shoe insole (1);
- removing the foam plastic shoe insole (1) from the shoe sole foam mould after the foam plastic (7) has cured,
**characterized in that**
- the flexible layer (6), before being placed in the lower mould half, is coated with a bonding agent (10) on the side directed away from the foot, or bonding agent (10) is introduced onto a shaping surface of the lower mould half in such a way that the bonding agent (10) fixes the flexible layer (6) full faced, without any spaces, over shaping surface.

2. Method according to Claim 1, in which the bonding agent (10) is removed from the underside (8) of the foam plastic shoe insole (1) after the foam plastic shoe insole (1) has been withdrawn from the shoe sole foam mould.

3. Method according to Claim 1 or 2, in which the bonding agent (10) is a hot-melt adhesive or a pressure-sensitive adhesive.

4. Method according to one of Claims 1 to 3, in which at least the lower mould half of the shoe sole foam mould is temperature-controlled.

5. Orthopaedic foam plastic shoe insole (1) with a upper side (9) directed towards a foot and forming a foot bed, and with an underside (8) adapted to a shoe interior shape, wherein the shoe insole (1) is produced from a foamed plastic (7) which, by means of a shoe insole foam mould, is foamed onto a flexible layer (6) which is impermeable to the plastic (7), **characterized in that** the flexible layer (6), on its inner face directed towards the foamed plastic (7), is connected permanently to the foamed plastic, and **in that**, on the outer face of the flexible layer (6), for completely bonding, without any spaces, to a surface of the foam mould forming the underside (8) of the shoe insole (1), the flexible layer (6) is coated with a bonding agent (10), such that the flexible layer (6) is arranged on the underside (8) of the shoe insole (1), and foam plastic (7) is foamed only between the inner face of the flexible layer (6) and the upper side(9) of the shoe insole (1).

6. Shoe insole (1) according to Claim 5, in which the bonding agent (10) is a hot-melt adhesive or a pressure-sensitive adhesive.

7. Shoe insole (1) according to either of Claims 5 and 6, in which the foam plastic is polyurethane (PU) or ethylene-vinyl acetate (EVA).

8. Shoe insole (1) according to one of Claims 5 to 7, in which the flexible layer (6) is a plastic film, or a textile impermeable to the foam plastic (7).

9. Shoe insole (1) according to one of Claims 5 to 8, in which the flexible layer (6) has a textile on the outer face and/or the shoe insole (1) has a textile-like cover layer on the upper side (9).

10. Shoe insole (1) according to one of the preceding claims, in which the flexible layer (6) has carbon fibres.

11. Shoe insole (1) according to one of the preceding claims, in which the flexible layer (6) and/or the foam plastic (7) extends over the heel area and/or metatarsal area and/or forefoot area (2).

12. Shoe insole (1) according to one of the preceding claims, in which the foam plastic (7) in the forefoot area (2) of the shoe insole (1) has a lesser hardness than the foam plastic (7) in the heel area (4) of the shoe insole (1).

13. Shoe insole (1) according to one of the preceding claims, in which the flexible layer (6) in the heel area (4) has a recess (5), which is filled with foam plastic (7).

## Revendications

1. Procédé de fabrication d'une semelle intérieure de chaussure en plastique moussé (1) constituée d'un plastique moussable et d'une couche flexible dans un moule de moussage de semelles de chaussures comprenant une moitié de moule supérieure et une moitié de moule inférieure, la moitié de moule supérieure formant une assise plantaire orthopédique sur un côté supérieur (9) orienté vers un pied et la moitié de moule inférieure formant un côté inférieur (8) de la semelle intérieure de chaussure (1) adapté à la forme intérieure de la une chaussure, la couche flexible (6) étant imperméable pour le plastique moussable (7) et formant une liaison durable avec le côté orienté vers le pied avec le plastique moussé (7), comprenant les étapes suivantes :
- l'insertion de la couche flexible (6) dans la moitié de moule inférieure ;
- l'introduction et le moussage du plastique dans le moule fermé pour former la semelle intérieure de chaussure en plastique moussé (1) ;
- l'extraction de la semelle intérieure de chaussure en plastique moussé (1) du moule de moussage de semelles de chaussures après le durcissement du plastique moussé (7),
**caractérisé en ce que**
- la couche flexible (6) est revêtue avant l'insertion dans la moitié de moule inférieure avec un agent adhésif (10) sur le côté opposé au pied ou un agent adhésif (10) est appliqué sur une surface façonnante de la moitié de moule inférieure de manière à ce que l'agent adhésif (10) fixe la couche flexible (6) sans écart sur l'ensemble de la surface de la surface façonnante.

2. Procédé selon la revendication 1, dans lequel l'agent adhésif (10) est éliminé du côté inférieur (8) de la semelle intérieure de chaussure en plastique moussé (1) après l'extraction de la semelle intérieure de chaussure en plastique moussé (1) du moule de moussage de semelles de chaussures.

3. Procédé selon la revendication 1 ou 2, dans lequel l'agent adhésif (10) est une thermocolle ou une colle sensible à la pression.

4. Procédé selon l'une quelconque des revendications 1 à 3, dans lequel au moins la moitié de moule inférieure du moule de moussage de semelles de chaussures est tempérée.

5. Semelle intérieure de chaussure en plastique moussé (1) orthopédique, comprenant un côté supérieur (9) orienté vers le pied, qui forme une assise plantaire, et un côté inférieur (8), qui est adapté à une forme intérieure de la une chaussure, la semelle intérieure de chaussure (1) étant fabriquée en un plastique moussé (7), qui est moussé au moyen d'un moule de moussage de semelles intérieures de chaussures sur une couche flexible (6), qui est imperméable pour le plastique (7), **caractérisée en ce que**
la couche flexible (6) est reliée de manière durable sur son côté intérieur orienté vers le plastique moussé (7) avec le plastique moussé, et **en ce que** la couche flexible (6) est revêtue sur le côté extérieur avec un agent adhésif (10) pour l'adhésion sans écart sur l'ensemble de la surface sur une surface du moule de moussage formant le côté inférieur (8) de la semelle intérieure de chaussure (1), de manière à ce que la couche flexible (6) soit agencée sur le côté inférieur (8) de la semelle intérieure de chaussure (1) et que le plastique moussé (7) ne soit moussé qu'entre le côté intérieur de la couche flexible (6) et le côté supérieur (9) de la semelle intérieure de chaussure (1).

6. Semelle intérieure de chaussure (1) selon la revendication 5, dans laquelle l'agent adhésif (10) est une thermocolle ou une colle sensible à la pression.

7. Semelle intérieure de chaussure (1) selon l'une quelconque des revendications 5 ou 6, dans laquelle le plastique moussé est le polyuréthane (PU) ou l'éthylène-acétate de vinyle (EVA).

8. Semelle intérieure de chaussure (1) selon l'une quelconque des revendications 5 à 7, dans laquelle la couche flexible (6) est une feuille en plastique ou un textile imperméable pour le plastique moussé (7).

9. Semelle intérieure de chaussure (1) selon l'une quelconque des revendications 5 à 8, dans laquelle la couche flexible (6) comprend un textile sur le côté extérieur et/ou la semelle intérieure de chaussure (1) comprend une couche supérieure de type textile sur le côté supérieur (9).

10. Semelle intérieure de chaussure (1) selon l'une quelconque des revendications précédentes, dans laquelle la couche flexible (6) comprend des fibres de carbone.

11. Semelle intérieure de chaussure (1) selon l'une quelconque des revendications précédentes, dans laquelle la couche flexible (6) et/ou le plastique moussé (7) s'étendent sur la zone du talon et/ou du métatarse et/ou de l'avant du pied (2).

12. Semelle intérieure de chaussure (1) selon l'une quelconque des revendications précédentes, dans laquelle le plastique moussé (7) présente dans la zone de l'avant du pied (2) de la semelle intérieure de chaussure (1) une dureté plus faible que le plastique moussé (7) dans la zone du talon (4) de la semelle intérieure de chaussure (1).

13. Semelle intérieure de chaussure (1) selon l'une quelconque des revendications précédentes, dans laquelle la couche flexible (6) comprend dans la zone du talon (4) une ouverture (5), qui est remplie avec le plastique moussé (7).
